Europäisches Patentamt

(19) European Patent Office

Office européen des brevets

(11) Publication number: **0 256 840**
**A2**

# (12) EUROPEAN PATENT APPLICATION

(21) Application number: **87307106.2**

(22) Date of filing: **11.08.87**

(51) Int. Cl.⁴: **B 01 D 15/04**

(30) Priority: **13.08.86 US 896013**

(43) Date of publication of application:
**24.02.88 Bulletin 88/08**

(84) Designated Contracting States:
**AT CH DE FR GB IT LI NL SE**

(71) Applicant: **ADVANCED SEPARATION TECHNOLOGIES INCORPORATED**
**270 First Avenue South**
**St. Petersburg Florida 33733 (US)**

(72) Inventor: **Berry, W. Wes**
**6324 Fern Lane**
**Lakeland Florida 33803 (US)**

(74) Representative: **Pendlebury, Anthony et al**
**Page, White & Farrer 5 Plough Place New Fetter Lane**
**London EC4A 1HY (GB)**

(54) **Process for separation of acids and corresponding acid metal salts.**

(57) A process for continuously separating acids from a mixture of acids and their corresponding salts employing the concept of acid retardation is disclosed. The process is carried out by feeding the mixture to an Advanced Separation Device filled with a resin which preferentially adsorbs the acid over the corresponding salt. By virtue of the preferential adsorption of the acid by the resin, the addition of an eluant such as water causes the salt to elute first and the acid second. The Advanced Separation Device enables the process to be carried out continuously and is amenable to the low relative treatment ratios necessary for exploitation of the acid retardation concept.

EP 0 256 840 A2

Bundesdruckerei Berlin

## Description

## PROCESS FOR SEPARATION OF ACIDS AND CORRESPONDING ACID METAL SALTS

The present invention relates to methods for separating acids from a mixture of acids with their corresponding salts and more particularly to an ion exchange method which separates acids from their corresponding salts using the concept of acid retardation.

Acid retardation separations involve the separation of an acid from a mixture of acid and a corresponding salt by virtue of the preferential adsorption of strong acids on ion exchange resins. More specifically, the preferential adsorption of strong acids onto ion exchange resins causes the movement of the acid to be relative to the movement of the salt and thereby enables the mixture to be effectively separated.

One technique employing principles of acid retardation to separate an acid from a mixture of the acid with its corresponding salt is disclosed in U.S. Patent No. 4,528,101. A single fixed bed exchange column filled with an anion exchange resin and having feed, discharge, and recycle means is employed. To separate hydrochloric acid from a mixture of hydrochloric acid and sodium chloride, the anion exchange resin in chloride form is first loaded with deionized water. The feed mixture is fed into the top of the resin bed and water drawn off from the bottom of the bed as waste. As the feed stream flows into the top of the anion exchange bed and flows down, the hydrochloric acid is retarded near the top of the bed while the sodium chloride in solution flows relatively quickly towards the discharge means at the bottom of the bed. The waste conduit is then closed and a small bed volume of the effluent is recycled.

At this point in the process, the acid has essentially separated from the salt, the salt being positioned in a layer primarily near the bottom of the resin bed and the acid being positioned in a layer near the upper portion of the resin bed and an interface layer of mixed acid/salt being present therebetween.

Rinse water is then fed into the top of the fixed bed which causes displacement of a solution containing primarily the salt through the waste conduit. Additional rinse water is added to displace the mixed acid and salts from the bed and to place the layer containing primarily hydrochloric acid at the bottom of the bed ready for discharge. The interface layer containing the mixed acid/salt is recycled to the top of the bed. The normal service cycle then proceeds. First, the feed mixture of the acid and corresponding acid salt are added to the top of the fixed bed, which causes the simultaneous discharge of a solution of relatively pure hydrochloric acid from the bottom of the bed. As the hydrochloric acid solution becomes more dilute, corresponding to the beginning of the next layer, the discharged material is recycled to the top of the bed. In the next step, rinse water is added so as to cause a separation of the acid and acid salt fed into the column in the previous step, the flow of acid being retarded relative to the flow of the salt. The salt fraction is then discharged as waste and the salt/acid interface recycled as previously described in order to complete the cycle.

While the above-described method represents an adequate means with which to implement principles of acid retardation, it nonetheless has not proven completely satisfactory. One drawback relates to the fact that the process is not truly continuous. Thus, rather than continuously feeding the mixture of acid and corresponding salt as well as the eluant and continuously withdrawing the separate acid and salt streams, the process of U.S. Patent No. 4,528,101 is carried out by periodically feeding the acid/salt mixture, rinsing water, and recycled materials as well as periodically withdrawing the separate acid and salt streams. Another drawback of the above-described process relates to its requirement for constantly monitoring and re-directing the various feed and effluent streams. Thus, the discharge is constantly being alternated between salt waste, acid product, and recycle modes. In similar fashion, both the types and amounts of feed materials being fed to the top of the resin bed are constantly changing.

In light of the stringent processing conditions necessary for carrying out separations based on acid retardation in the non-continuous process described above, it is not surprising that a truly continuous process employing the acid retardation concept has proven to be elusive in the art. One reason for the paucity of acid retardation separation processes which are truly continuous relates to the low relative treatment ratios necessary for their successful implementation, i.e., the low amount of liquid treated per cubic foot of resin. Thus, conventional ion exchange devices are typically not amenable to processes requiring low treatment ratios. While in theory, it might be possible to obtain a truly continuous process using a plurality of devices such as those described in U.S. Patent No. 4,528,101, the complexity of the resulting system would make the effective regulation thereof highly difficult. More specifically, in a system employing a plurality of the above-described devices, it would be necessary not only to continuously monitor and regulate each individual device to ensure proper feed, waste and recycle operations but, in addition, it would further be necessary to coordinate the individual systems with one another.

In view of the foregoing limitations and shortcomings of prior art processes as well as other disadvantages not specifically mentioned above, it should be apparent that there still exists a need in the art for a truly continuous process for carrying out separations of an acid from a mixture of the acid and its corresponding salt by acid retardation. It is, therefore, a primary objective of this invention to fulfil that need by providing an acid retardation separation process in an Advanced Separation Device, described hereinafter, which is truly continuous yet is amenable to the low relative treatment ratios necessary for successful exploitation of the acid retardation concept.

Accordingly, the present invention provides a continuous process for separating acids from a mixture of acids and corresponding acid salts comprising the steps of:

(A) providing an Advanced Separation Device (ASD) having:

(i) at least one fixed acid/salt feed port and at least two fixed eluant feed ports as well as corresponding fixed acid/salt and fixed eluant discharge ports, the at least two fixed eluant discharge ports defining a separate high salt zone and high acid zone;

(ii) a plurality of resin-filled chambers disposed between and moving about a circular path in periodic fluid communication with the fixed feed and fixed discharge ports;

(B) feeding the mixture of acids and corresponding acid salts to the at least one fixed acid/salt feed port for delivery into the resin-filled chambers and loading the mixture onto the resin;

(C) feeding an eluant to a fixed eluant feed port for delivery into the resin-filled chambers and preferentially stripping the acid salts from the resin loaded with the mixture of acids and corresponding acid salts;

(D) discharging a first effluent stream from at least one of the fixed eluant discharge ports defining the high salt zone, the first effluent stream being comprised primarily of the acid salt; and

(E) discharging a second effluent stream from at least one of the fixed eluant discharge ports defining the high acid zone, the second effluent stream being comprised primarily of the acid.

The process of the present invention is adapted to separate an acid from a mixture of the acid and its corresponding salt. Examples of such mixtures are hydrochloric acid/sodium chloride, nitric acid/sodium nitrate, phosphoric acid/sodium phosphate, sulfuric acid/sodium sulfate, and copper sulfate/sulfuric acid. Such mixtures typically originate from metal treating systems, hydrometallurgical leaching systems, inorganic chemical processing operations and numerous other chemical operations. The mixtures treated in accordance with the present invention generally contain between 5 to 30% by weight of the acid and 1 to 20% by weight of the corresponding salt of the acid.

The above-described feed is then fed into the ASD for contact with the resin. 1 to 2 gallons of the feed mixture are fed per cubic foot of resin which contacts that feed mixture. The amount of the feed mixture which is contacted with the resin in the ASD at this stage of the operation is deliberately low so that the resin will be only partially loaded with liquid and so that essentially no solution will actually pass through the resin.

The resin utilized in the process of the present invention is one which preferentially adsorbs the acid over its corresponding salt such as a strong anion exchange resin in a form which is equivalent to the acid being fed. Thus, if a mixture of hydrochloric acid and sodium chloride is fed into the system, the anion exchange resin will be in the chloride form. The resin is generally in particulate form although it will be appreciated that other types of resins, e.g., fibers may be employed. An example of a suitable resin for use in accordance with the present invention is DUOLITE A-101D, which is manufactured by Rohm and Haas Co., Philadelphia, Pa. Other suitable resins include TG550A, which is manufactured by Dow Chemical Corp., Midland, Michigan.

Fresh resin is typically put into the proper anionic form by first contacting it with the acid of the anion chosen. For example, if resin in the chloride form is desired, it is first contacted for a period of 10 to 30 minutes with hydrochloric acid. The concentration of the acid typically ranges from 5 to 20% by weight. Such techniques are well known to persons skilled in the art and are normally described with a great deal of particularity in the technical literature which accompanies the resin.

After the resin has been partially loaded with the mixture of the acid and the salt corresponding to the acid, it is contacted with an eluant. The eluant used in the examples of this invention is water since no actual ion exchange occurs during acid retardation techniques. Advantage is taken of the fact that a strong base resin in a particular anionic form will retain or retard the acid corresponding to said anion. Thus, because the acid has a greater affinity for the resin than does the salt, the water preferentially moves the salt phase forward at a faster rate than the acid. The feed rate of the water into the resin loaded with the acid/salt mixture is also relatively low, i.e., in the range of 0.25 to 5.0 gallons of water per square foot per minute, with a range of 0.5 gallons per minute per square foot preferred. The rate of water flow is selected so as to establish a defined profile in the ASD so that reasonably pure salt and acid phases can be obtained. The salt phase exits the system first followed by a small amount of an acid/salt mixture. Finally, the acid phase exits the system. The salt phase contains a concentration of at least 50% of the salt contained in the initial feed whereas the acid phase contains a concentration of at least 50% of the acid contained in the initial feed. Intermediate to the salt and acid phases is a phase containing both acid salt and acid.

The process of the present invention enables a substantial portion of the acid to be separated from the salt/acid mixture. Thus, for 1 gallon of feed containing 10% acid and 6% of salt, it is possible to obtain 0.75 gallons of an 8 to 9% aqueous solution of the salt-free acid and about 0.25 gallons of a 4 to 5% aqueous solution of the acid-free salt. The intermediate salt/acid mixture is recycled.

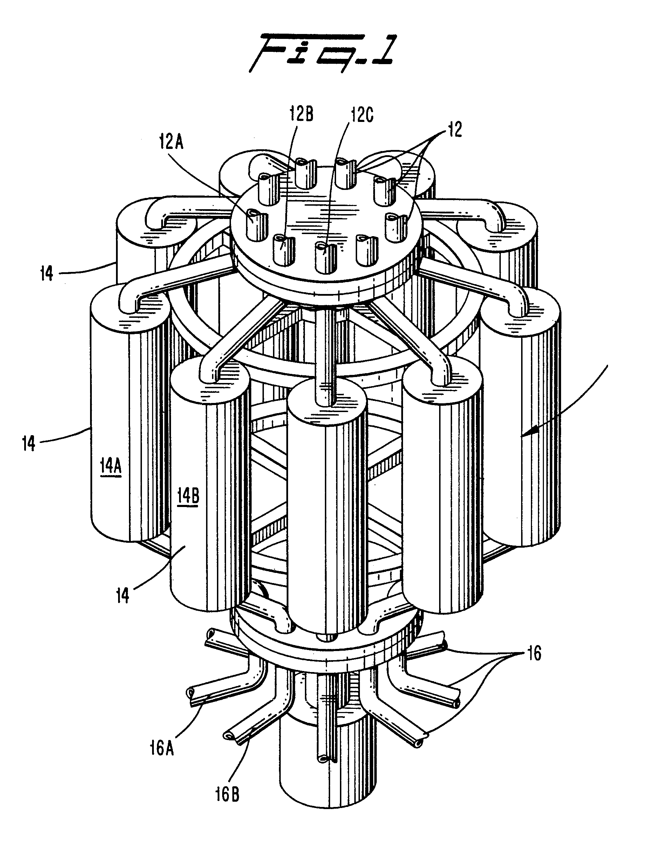

The Advanced Separation Device (ASD) which is used to carry out the process of the present invention is described in detail in U.S. Patent No. 4,522,726, the disclosure of which is hereby incorporated by reference. A brief discussion of the ASD is presented here to facilitate the discussion of its use in conjunction with the acid retardation process of the present invention. A perspective view of an example of an ASD is shown in Fig. 1. The separation device comprises a plurality of fixed feed ports 12, to each of which may be supplied various feed materials. In the case of the present invention, those materials include the acid/salt feed and the eluant.

Moving about a circular path in periodic fluid communication with each of the above-described fixed feed ports, are a plurality of chambers preferably filled with the strong anion exchange resin which is in a form equivalent to the acid being fed. The resin in the chambers 14 interacts with the fluid fed into the fixed feed ports 12 to ultimately produce an effluent stream comprising the interaction product of the resin and the feed. In the process of the present invention, the strong anion exchange resin is advantageously the DUOLITE A-101D resin manufactured by Rohm and Haas.

The feed materials are supplied continuously to the respective feed ports 12 for periodic interaction with the resin in each of the chambers 14. In similar fashion, a plurality of fixed discharge ports 16 are provided at an end of the chambers opposite to that of the fixed feed ports 12. Each feed port 12 has a corresponding discharge port 16. After the interaction product passes through a given fixed discharge port, it may be purged from the system, recirculated back to a selected feed port, or a combination of both.

To carry out the process of the present invention, the mixture of the acid and its corresponding salt as well as the eluant streams are each transported to given fixed feed ports so that the resin will be loaded with the acid/salt mixture, the salt component preferentially eluted from the resin and then the acid less preferentially eluted from the resin.

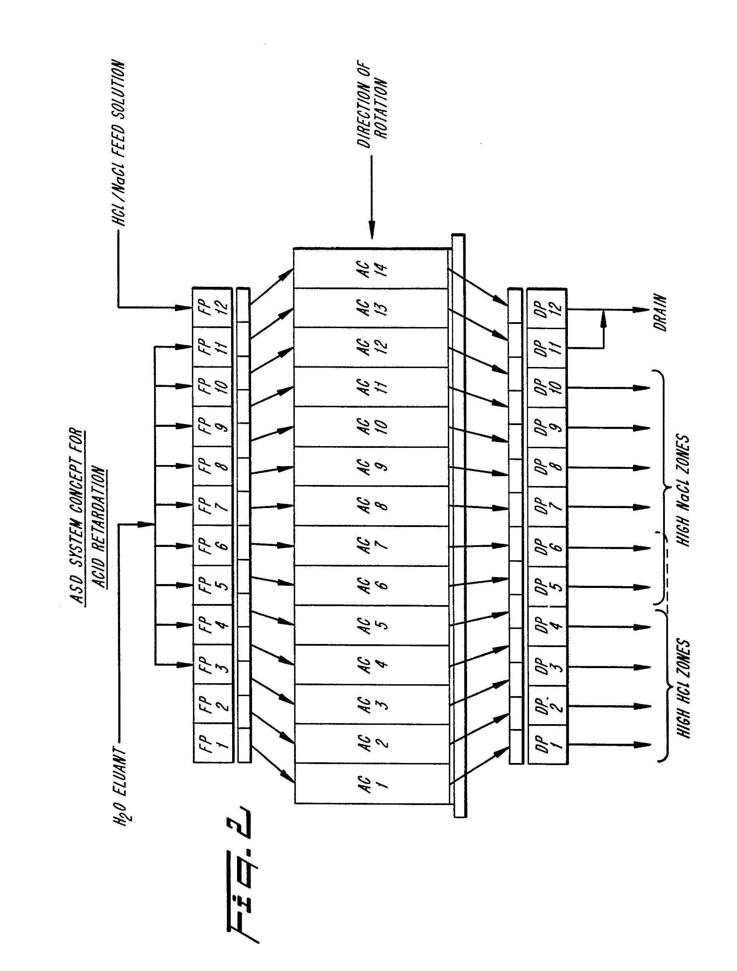

The process, carried out in conjunction with an exemplary ASD, is schematically illustrated at Fig. 2 which shows a schematic illustration of the Advanced Separation Device system for carrying out the separation of an acid from a mixture of the acid and its corresponding salt by acid retardation. The ASD illustrated has 12 fixed feed ports FP1-FP12 as well as 12 corresponding fixed discharge ports DP1-DP12. Disposed between and moving about a circular path in periodic fluid communication with the fixed feed and discharge ports are the 14 adsorption chambers AC1-AC14.

In the ASD system illustrated in Fig. 2, the chambers are each 3 ft high and have a diameter of 2 in. Each chamber is filled with 1 litre of A-101D anion resin in the chloride form. The chambers are rotated clockwise (viewed from the top) at the rate of about 30 min per rotation.

A solution containing 6% by weight sodium chloride dissolved in 10% by weight hydrochloric acid is fed into feed port FP12 at the rate of about 1 to 2 gallons of liquid per ft3 of resin passing the zone in a given time period. In this example, the 1 litre of resin in each chamber rotates at the rate of 30 min per revolution and accordingly, 50 to 100 mL/min of the feed is fed into FP12. By feeding the acid/salt mixture into FP12 at this rate, the resin is only partially loaded and therefore, essentially no solution discharges from the ASD at DP12.

Water is fed into the ASD at the fixed feed ports FP3-FP11 at the rate of about 50 mL/min. From Fig. 2 it will be appreicated that neither acid/salt solution nor water eluant are fed into the ASD at FP1 and FP2. Rather, these stations are used merely to drain liquid previously added to the ASD chambers.

Because the salt is preferably eluted from the resin by the water eluant, it emerges first through the fixed discharge ports DP10 to DP7. Between DP6 and DP4, both the final portions of the salt and the initial portions of the acid elute through the ASD. Finally, between DP3 and DP4, an effluent stream high in acid is discharged from the ASD. The effluent from DP6 to DP4 would typically be recycled in order to maximize acid or salt recovery.

The hydrochloric acid phase discharged from discharge ports DP1-DP3 is recovered whereas the sodium chloride phase is appropriately disposed of as waste. It will be appreciated that small amounts of acid will be present in the salt phase which, if not used for another process, should be neutralized prior to being discharged. The cost of neutralizing the small amount of hydrochloric acid remaining in the salt solution, of course, is far below what it would be if the acid were not first removed from the original solution using the acid retardation concept and the ASD.

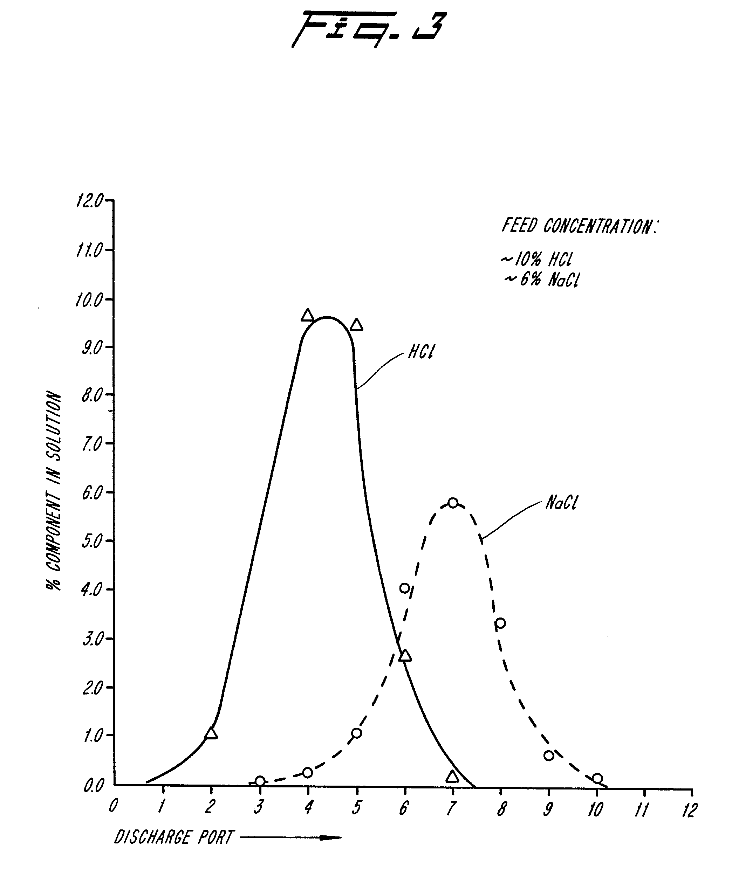

Figure 3 is a graph depicting the projected response of the Advanced Separation Device in the separation of sodium chloride from hydrochloric acid by acid retardation.

In Figure 3 is shown the expected response of the ASD in the acid retardation mode. A feed comprising a solution of 10% by wt HCl containing about 6% by wt NaCl was fed into a bench-scale system. The data obtained was then analyzed and a projected response of the ASD obtained.

Enough of the above-described feed is fed into fixed feed port FP1 so as to form a charge of 1 gal of solution per ft3 of resin. Water was fed into feed ports FP3 to FP11 at the rate of 0.5-0.8 gal of water per ft3 of resin.

As illustrated in Figure 3, HCl discharge was maximum at DP4 whereas NaCl discharge was maximum at DP7.

From Figure 3, it will be appreciated that optimum HCl/NaCl splitting may be empirically determined for each anion exchange resin/ASD/feed solution system encountered by adjusting the height of the resin bed, the various fluid flow rates and the rate of rotation of the ASD. Once such optimization has been achieved, the acid retardation separation process may be carried out both continuously and with results superior to those achieved in conventional fixed or pulsed bed systems in terms of flow rates, degree of splitting achieved, level of dilution, capacity of the system and the like.

The continuous process of this invention requires a minimum of switching valves and monitoring and allows for treatment of small quanitites of liquid per unit volume of resin, even when the overall volume of liquid flowing through the system is relatively large.

Furthermore, the process of this invention enables close control of the water stripping rate to be achieved in order to optimize the resolution of the separated salt and acid phases as well as minimize the dilution of each of the separated phases with water.

## Claims

1. A continuous process for separating acids from a mixture of acids and corresponding acid salts comprising the steps of:

(A) providing an Advanced Separation Device having:

(i) at least one fixed acid/salt feed port and at least two fixed eluant feed ports as well as corresponding fixed acid/salt and fixed eluant discharge ports, the at least two fixed eluant discharge ports defining a separate high salt zone and high acid zone;

(ii) a plurality of chambers filled with a resin which preferentially adsorbs acids over the corresponding salts, said chambers being disposed between and moving about a circular path in periodic fluid communication with said fixed feed and fixed discharge ports;

(B) feeding said mixture of acids and corresponding acid salts to said at least one fixed acid/salt feed port for delivery into said resin-filled chambers and loading said mixture onto said resin;

(C) feeding an eluant to a fixed eluant feed port for delivery into said resin-filled chambers and preferentially stripping the acid salts from said resin loaded with said mixture of acids and corresponding acid salts;

(D) discharging a first effluent stream from at least one of said fixed eluant discharge ports defining the high salt zone, said first effluent stream being comprised primarily of said acid salt; and

(E) discharging a second effluent stream from at least one of said fixed eluant discharge ports defining the high acid zone, the second effluent stream being comprised primarily of said acid.

2. A process according to Claim 1, wherein said mixture includes about 5 to about 30% by weight of said acid and about 1 to about 20% by weight of the salt corresponding to said acid.

3. A process according to Claim 2, wherein said mixture includes about 10 to about 20% by weight of said acid and about 5 to 10% by weight of the salt corresponding to said acid.

4. A process according to any one of the preceding claims, wherein said acids are hydrochloric acid, sulfuric acid, nitric acid, phosphoric acid and perchloric acid.

5. A process according to any one of the preceding claims, wherein said resin which preferentially adsorbs acids over the corresponding salts of said acids is a strong anion resin.

6. A process according to any one of the preceding claims, wherein the resin is only partially loaded with said mixture of acids and corresponding acid salts in step (B).

7. A process according to any one of the preceding claims, wherein said eluant is water.

8. A process according to any one of the preceding claims, wherein said mixture is acid and its corresponding salt is hydrochloric acid/sodium chloride, nitric acid/sodium nitrate, sulfuric acid/sodium sulfate and copper sulfate/sulfuric acid.

9. A process according to any one of the preceding claims, wherein about 1 to about 2 gallons of feed mixture are fed into the Advanced Separation Device per cubic foot of resin which contacts that feed mixture.

10. A process according to any one of the preceding claims, further including the step of putting the resin into proper anionic form by contacting said resin with an acid of said anion prior to feeding said mixture of acids and corresponding acid salts to said at least one fixed acid/salt feed port for delivery into said resin-filled chambers.

11. A process according to any one of the preceding claims, wherein the concentration of salt in the effluent discharged from the high salt zone is at least about 50% of the concentration of the salt in the initial feed.

12. A process according to any one of the preceding claims, wherein the concentration of acid in the effluent discharged from the high acid zone is at least about 50% of the concentration of the acid in the initial feed.

13. A process according to any one of the preceding claims, further including fixed eluant discharge ports defining an intermediate zone, the effluent from said intermediate zone containing both the acid and the acid salt.

14. A process according to Claim 13, wherein the effluent discharged from said intermediate zone is recycled to said at least one fixed acid/salt feed port.

FIG.1

ASD SYSTEM CONCEPT FOR
ACID RETARDATION

Fig. 2

0256840

FIG. 3